# EUROPÄISCHE PATENTSCHRIFT

(11) **EP 2 194 362 B1**
(45) Veröffentlichungstag und Bekanntmachung des Hinweises auf die Patenterteilung: **27.07.2016**
(21) Anmeldenummer: 08170957.8
(22) Anmeldetag: 08.12.2008
(51) Int. Cl.: G01F 23/288, G01N 9/00

(54) **Radiometrische Füllstands- oder Dichtemessung**
Radiometrical level or density measurement
Mesure de niveau ou de densité par radiométrie

(43) Veröffentlichungstag der Anmeldung: 09.06.2010
(73) Patentinhaber: VEGA Grieshaber KG, 77709 Wolfach (DE)
(72) Erfinder: Rauer, Winfried, 77716 Fischerbach (DE); Fehrenbach, Josef, 77716 Haslach (DE)
(74) Vertreter: Maiwald Patentanwalts GmbH

(56) Entgegenhaltungen:
- WO-A-02/18883
- WO-A-2005/078397
- DE-A1- 4 233 278
- DE-A1- 10 048 559
- US-A- 5 218 202
- NISTOR A: "MODERNE RADIOMETRISCHE FULLSTANDMESSTECHNIK" MESSEN PRUFEN AUTOMATISIEREN, HANS HOLZMANN VERLAG. BAD WORISHOFEN, DE, Nr. 10, 1. Oktober 1988 (1988-10-01), Seiten 496-500, XP000031866
- EIDSNES K S ET AL: "Scattered Gamma Radiation Utilized for Level Measurements in Gravitational Separators" IEEE SENSORS JOURNAL, IEEE SERVICE CENTER, NEW YORK, NY, US, Bd. 5, Nr. 2, 1. April 2005 (2005-04-01), Seiten 175-182, XP011128737 ISSN: 1530-437X

## Beschreibung

### Gebiet der Erfindung

Die Erfindung betrifft die radiometrische Füllstands- oder Dichtemessung. Insbesondere betrifft die Erfindung ein radiometrisches Füllstandsmesssystem und ein radiometrisches Dichtemesssystem zur Bestimmung eines Füllstands oder einer Dichte eines Mediums sowie ein Verfahren zur radiometrischen Bestimmung eines Füllstands, für die Grenzstandmessung, einer Dichte eines Mediums oder für die Dursatzmessung an Förderbändern bzw. Förderschnecken.

### Technologischer Hintergrund

In heutigen radiometrischen Messsystemen werden sog. Photomultiplier verwendet, die die von einem Szintillator erzeugten Lichtblitze detektieren und in ein elektrisches Signal umwandeln. Solche Photomultiplier benötigen eine aufwändige Spannungserzeugung. Außerdem ist der Platzbedarf relativ groß.

Die WO 02/18883 A2 beschreibt eine Vorrichtung zur Bestimmung und/oder Überwachung der Dichte und/oder des Füllstands eines Füllguts in einem Behälter. Dabei wird ein aus einem Detektorelement stammendes Signal in einem Verstärker verstärkt. Ein Differentiator entfernt hochenergetische Störsignale (zum Beispiel kosmische Strahlung) aus dem Messsignal, ein Komparator entfernt niederenergetische Rauschanteile.

### Zusammenfassung der Erfindung

Es ist eine Aufgabe der Erfindung, ein verbessertes radiometrisches Messsystem für die Füllstandsmessung oder für die Dichtemessung zu schaffen.

Es sind ein radiometrisches Füllstands- oder Dichtemesssystem zur Bestimmung eines Füllstands oder einer Dichte eines Mediums sowie ein Verfahren zur radiometrischen Bestimmung eines Füllstands oder einer Dichte des Mediums gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Messsystem und das Verfahren. In anderen Worten lassen sich Merkmale, die im Folgenden im Hinblick auf das Messsystem beschrieben werden, auch in dem Verfahren implementieren, und umgekehrt.

Gemäß der Erfindung ist ein radiometrisches Füllstands- oder Dichtemesssystem zur Bestimmung eines Füllstands oder einer Dichte eines Mediums in einem Tank angegeben, wobei das Messsystem einen Umwandler, eine Photodiode und eine Auswerteeinheit aufweist. Der Umwandler dient dem zumindest teilweisen Umwandeln von ionisierender erster Strahlung, die das Medium durchstrahlt, in elektromagnetische zweite Strahlung. Die Photodiode dient dem zumindest teilweisen Umwandeln der zweiten Strahlung in ein elektrisches Signal z. B. ein Spannungssignal und die Auswerteeinheit dient der Bestimmung des Füllstands oder der Dichte des Mediums auf Basis einer Anzahl von erzeugten Spannungspulsen bzw. Spannungssignalen.

In anderen Worten werden die von dem Umwandler ausgegebenen elektromagnetischen Signale (zweite Strahlung) zumindest teilweise von der Photodiode detektiert. Die Photodiode wandelt diese elektromagnetischen Signale in entsprechende Spannungssignale um, die dann gezählt werden können. Vor dem Zählen können miteinander korrespondierende Signale (die also auf demselben Ereignis beruhen) aufsummiert werden.

Ein Vorteil der Verwendung von Photodioden liegt darin, dass sie klein sind, preiswert herzustellen sind sowie einfach anzusteuern sind. Die Kombination mehrerer Photodioden erlaubt es, Dunkelpulse der Photodioden zu unterdrücken sowie die Empfindlichkeit des Systems zu erhöhen.

Unter dem zumindest teilweisen Umwandeln der ionisierenden Strahlung ist zu verstehen, dass nicht sämtliche Strahlung, die von der radioaktiven Quelle ausgesendet wird und den Tank durchläuft, umgewandelt werden muss. Es genügt, wenn lediglich ein Bruchteil dieser Strahlung umgewandelt wird. Ebendieses gilt auch für die Umwandlung der Strahlung durch die Photodiode, da die Photodiode bzw. der Photodiodenarray gegebenenfalls nicht sämtliche Strahlung vom Umwandler detektiert weil z.B. ein Teil dieser Strahlung an den Photodioden vorbeiläuft.

Gemäß einem weiteren Ausführungsbeispiel der Erfindung handelt es sich bei der Photodiode um eine Lawinenphotodiode (Avalanche Photodiode, APD).

Statt beispielsweise eines Photomultipliers, der auf Röhrentechnologie beruht, wird eine Photodiode auf Halbleiterbasis verwendet. Diese ist kleiner und einfacher anzusteuern als ein Photomultiplier. Von Vorteil sind Avalanche Photodioden, da diese eine sehr hohe Empfindlichkeit aufweisen.

Gemäß einem weiteren Ausführungsbeispiel der Erfindung ist der Umwandler als Szintillationszähler oder Szintillator ausgeführt, der die auftreffende ionisierende Strahlung in Lichtblitze umwandelt.

Gemäß einem weiteren Ausführungsbeispiel der Erfindung weist das Messsystem weiterhin einen Komparator zum Umwandeln des Spannungspulses aus der Photodiode in ein digitales Signal auf.

Gemäß einem weiteren Ausführungsbeispiel der Erfindung ist die Auswerteeinheit zum Zählen der digitalen Signale, die von dem Komparator stammen, oder der Spannungspulse ausgeführt.

Gemäß der Erfindung weist das Messsystem eine Summationseinrichtung zum Aufsummieren von digitalen Signalen auf, die zur selben Zeit entstanden sind (also auf dem selben Ereignis im Szintillator beruhen und somit miteinander korrespondieren). Die Summationseinrichtung gibt dann ein korrespondierendes Summensignal aus. Die Auswerteeinheit dient in diesem Fall zum Zählen nur derjenigen Summensignale, welche eine vorbestimmte Mindestanzahl an digitalen Signalen aufweisen. Die restlichen Summensignale werden nicht gezählt, sondern verworfen.

Auf diese Weise kann vermieden werden, dass Fehlmessungen das Endergebnis negativ beeinflussen. Vielmehr werden nur diejenigen Signale berücksichtigt, die zur selben Zeit entstanden sind und demnach auf mehrere Lichtblitze zurückzuführen sind, die durch das selbe Ereignis im Szintillator generiert wurden, also beispielsweise von dem selben Gamma-Quant erzeugt wurden. Dunkelpulse, die z.B. durch das thermische Eigenrauschen der Photodiode erzeugt werden, stammen von unterschiedlichen Ereignissen und sind daher nicht zeitgleich. Diese werden hierdurch wirksam unterdrückt.

Gemäß einem alterntiven Ausführungsbeispiel der Erfindung ist die Summationseinrichtung zum Aufsummieren von Spannungspulsen, die zur selben Zeit entstanden sind, und zur Ausgabe eines korrespondierenden Summensignals ausgeführt, wobei die Auswerteeinheit zum Zählen nur derjenigen Summensignale ausgeführt ist, welche eine vorbestimmte Mindestimpulsstärke aufweisen. Die restlichen Summensignale werden wieder verworfen.

Gemäß der Erfindung ist ein Verfahren zur radiometrischen Bestimmung eines Füllstands oder einer Dichte eines Mediums angegeben, bei dem ionisierende erste Strahlung, die das Medium durchstrahlt, zumindest teilweise in elektromagnetische zweite Strahlung, z.B. Licht, umgewandelt wird. Diese zweite Strahlung wird zumindest teilweise in einen Spannungspuls mit Hilfe einer Photodiode umgewandelt. Danach erfolgt die Bestimmung des Füllstands oder der Dichte des Mediums auf Basis einer detektierten Anzahl an erzeugten Spannungspulsen.

Vor der Bestimmung des Füllstands oder der Dichte können die erzeugten Spannungspulse in digitale Signale umgewandelt werden, die daraufhin gezählt werden.

Insbesondere können, wie bereits oben beschrieben, die digitalen Signale oder die Spannungspulse, die zur selben Zeit entstanden sind, aufsummiert werden. Das korrespondierende Summensignal wird nur dann für die Bestimmung des Messwerts verwendet, wenn es eine Mindestbedingung erfüllt. Zur Entscheidung, ob die Mindestbedingung erfüllt ist, kann ein Filter vorgesehen sein, der nur ausreichend starke Signale passieren lässt. Im Falle der Aufsummierung der digitalen Signale handelt es sich bei der Mindestbedingung darum, dass das Summensignal eine bestimmte Mindestzahl an digitalen Signalen aufweist, die miteinander addiert wurden. Im Falle der Aufsummierung der Spannungspulse handelt es sich bei der Mindestbedingung darum, dass der resultierende Gesamtimpuls eine Mindestimpulsstärke bzw. Mindestamplitude aufweist, also aus einer ausreichenden Anzahl an einzelnen Pulsen besteht.

Im Folgenden werden mit Verweis auf die Figuren Ausführungsbeispiele der Erfindung beschrieben.

### Kurzbeschreibung der Figuren

Fig. 1 zeigt eine Darstellung eines Messsystems gemäß einem Ausführungsbeispiel der Erfindung.
Fig. 2 zeigt eine Darstellung eines Messsystems gemäß einem weiteren Ausführungsbeispiel der Erfindung.
Fig. 3 zeigt eine Darstellung eines Messsystems gemäß einem weiteren Ausführungsbeispiel der Erfindung.
Fig. 4 zeigt ein Flussdiagramm eines Verfahrens gemäß einem Ausführungsbeispiel der Erfindung.
Fig. 5 zeigt eine Darstellung eines Messsystems gemäß einem weiteren Ausführungsbeispiel der Erfindung.

### Detaillierte Beschreibung bevorzugter Ausführungsbeispiele

Die Darstellungen in den Figuren sind schematisch und nicht maßstäblich.

In der folgenden Figurenbeschreibung werden für die gleichen oder ähnlichen Elemente die gleichen Bezugsziffern verwendet.

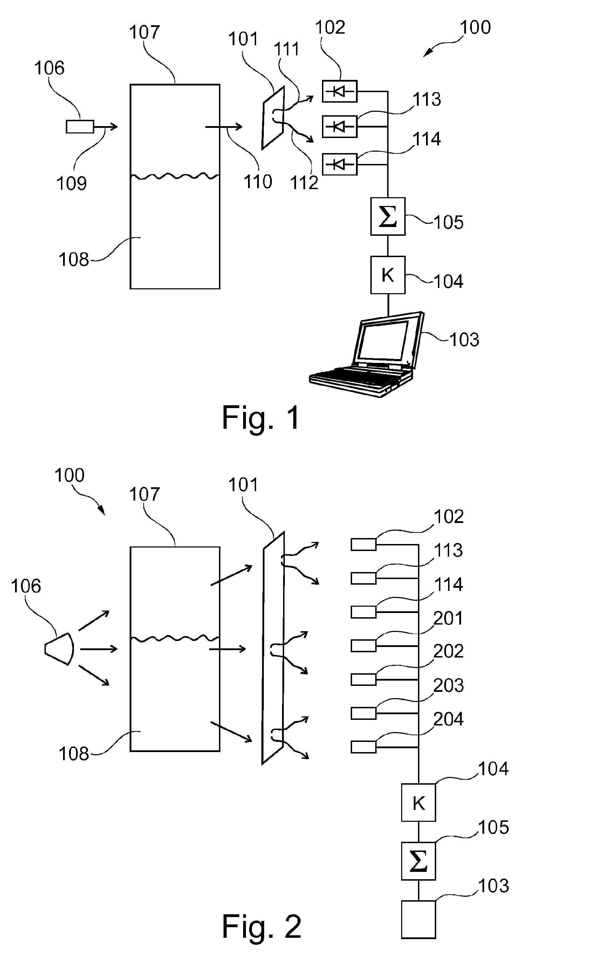

Fig. 1 zeigt eine Darstellung eines Messsystems gemäß einem Ausführungsbeispiel der Erfindung. Das Messsystem 100 weist eine radioaktive Quelle 106, einen Umwandler 101 in Form eines Szintillationszählers oder Szintillators, mehrere Photodioden 102, 113, 114, eine Summationseinrichtung 105, einen Komparator 104 sowie einen Mikroprozessor bzw. eine Auswerteeinheit 103 auf. Die Auswerteeinheit 103 kann beispielsweise in Form eines Computers ausgeführt sein.

Bei der radioaktiven Quelle handelt es sich beispielsweise um einen Gamma-Strahler. Die von der Quelle 106 erzeugte radioaktive bzw. ionisierende Strahlung 109 wird in Richtung eines Behälters oder Tanks 107 ausgestrahlt. Der Behälter 107 enthält ein Füllgut 108, beispielsweise in Form einer Flüssigkeit, eines Feststoffes oder eines Gases. Je nach Füllstand oder Dichte des Füllguts 108 wird die ionisierende Strahlung 109 beim Durchstrahlen des Behälters 107 mehr oder weniger stark gedämpft. Die auf der anderen Seite des Behälters heraustretende (Rest) Strahlung 110 trifft auf den Szintillationszähler 101.

Hierbei ist zu bemerken, dass es sich bei der radioaktiven Quelle 106 auch um einen Alpha- oder einen Beta-Strahler handeln kann.

Die ionisierende Strahlung bzw. das ionisierende Teilchen, das auf den Szintillator 101 trifft, erzeugt Lichtblitze 111, 112. Ein Gammaquant kann gleichzeitig hunderte bis tausende Photonen erzeugen, die zeitgleich emittiert werden und schussendlich als ein Ereignis registriert werden. Diese Lichtblitze (bzw. das Ereignis) werden von den Photodioden 102, 113, 114 aufgenommen und in entsprechende Spannungspulse umgewandelt, die miteinander korrelieren.

Die beiden Spannungspulse, die durch die Lichtblitze 111, 112 entstehen, werden in der Summationseinrichtung 105 aufsummiert und im Komparator 104 in ein digitales Signal umgewandelt, das dann, insofern das digitale Signal auf eine Mindestanzahl an einzelnen Spannungspulsen zurückzuführen ist, zur Bestimmung des Füllstandes oder der Dichte des Mediums durch die Auswerteeinheit 103 verwendet wird.

Fig. 2 zeigt ein weiteres Ausführungsbeispiel eines solchen Messsystems 100, bei dem nicht ein gerichteter radioaktiver Strahler 106 (wie in Fig. 1), sondern eine Strahlungsquelle 106 verwendet wird, die in mehrere Richtungen ausstrahlt und somit einen Großteil des Behälters 107 durchstrahlt.

Die vom Szintillator 101 erzeugten Lichtblitze werden von dem Diodenarray 102, 113, 114, 201 bis 204, der flächig ausgeführt sein kann, zumindest teilweise aufgenommen und in entsprechende Spannungspulse umgewandelt. Sämtliche Spannungspulse werden danach im Komparator 104 digitalisiert. Korrespondierende digitale Signale werden anschließend in der Einrichtung 105 aufsummiert und als Summensignal an die Auswerteeinheit 103 weitergegeben.

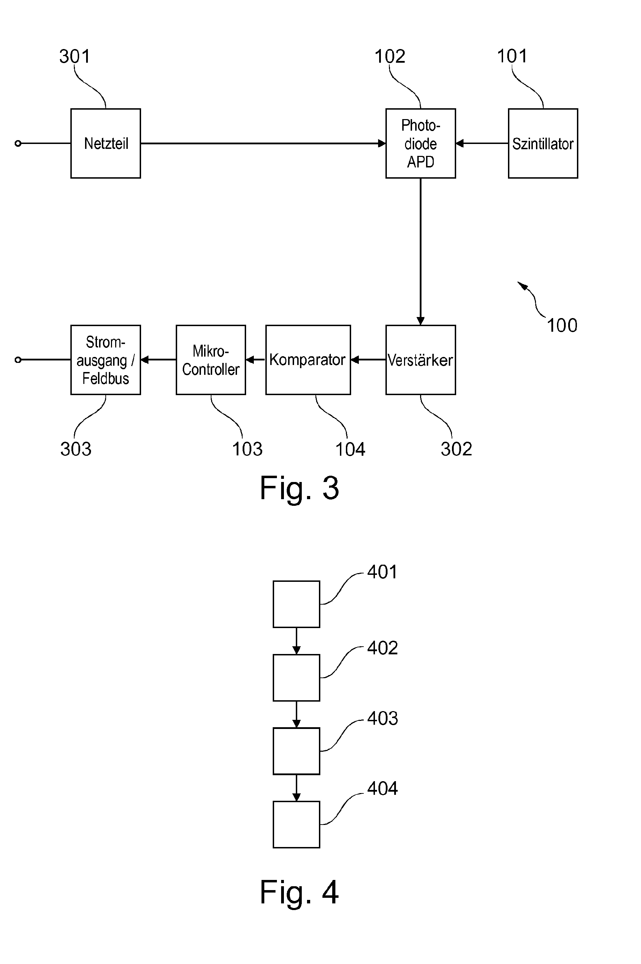

Fig. 3 zeigt ein Messsystem gemäß einem weiteren Ausführungsbeispiel der Erfindung. Das Messsystem umfasst ein Netzteil 301, einen Prozessor oder Mikrocontroller (Auswerteeinheit) 103, einen Szintillator 101, eine oder mehrere Photodioden 102, einen Signalverstärker 302, Komparatoren 104 sowie einen Stromausgang bzw. eine Feldbusschnittstelle 303.

Auch kann eine Spannungsvervielfachung vorgesehen sein.

Der Szintillator 101 wandelt radioaktive Gamma-Strahlung einer Strahlungsquelle in Lichtblitze um, die von der oder den Photodioden in Spannungspulse gewandelt werden. Der anschließende Signalverstärker verstärkt diese Spannungspulse. Komparatoren (beispielsweise für jede Diode einer) wandeln die Spannungspulse dann in digitale Pulse um, die vom Prozessor 103 gezählt werden. Abhängig von dem Prozesswert (also dem Füllstand im Tank oder den Dichteverhältnissen im Tank) wird die ionisierende Strahlung im Behälter mehr oder weniger stark absorbiert bzw. gedämpft. Damit ändert sich die Pulsrate.

Der Prozessor 103 bestimmt aus der Pulsrate den physikalischen Prozesswert.

Da Halbleiterbausteine Eigenrauschen besitzen, kann es insbesondere bei Lawinenphotodioden zu ungewollten Pulsen kommen, sog. Dunkelpulse. Die aktive Fläche der Halbleiterdioden ist kleiner als bei Photomultipliern.
Verwendet man nun aber mehrerer Photodioden parallel (als Array), kann das Messergebnis verbessert werden. Hierdurch wird die aktive Fläche vergrößert und gleichzeitig das Eigenrauschen unterdrückt, da das Eigenrauschen bei mehreren Dioden nicht kohärent ist. Die Messpulse sind aber sehr wohl kohärent, wenn sie auf das selbe ionisierende Ereignis zurückzuführen sind.

Werden nun die Ausgangspulse der Dioden summiert, ergeben kohärente Messpulse größere Ausgangspulse als die nicht kohärenten Rauschsignale. Auf diese Weise können die Messsignale, die auf einem ionisierenden Ereignis beruhen, von denjenigen Messsignalen, die auf Rauschen beruhen, getrennt werden.

Auch ist es möglich, dass die Ausgangspulse der Dioden zuerst in digitale Signale gewandelt werden, bevor Plausibilitätsprüfungen, wie z. B. eine "zwei aus drei Entscheidung", die Rauschsignale von den Messpulsen trennen.

Fig. 4 zeigt ein Flussdiagramm eines Verfahrens, bei dem in Schritt 401 ionisierende Strahlung in elektromagnetische Strahlung umgewandelt wird. In Schritt 402 wird dann die elektromagnetische Strahlung mit Hilfe einer Photodiode in einen Spannungsimpuls umgewandelt. In Schritt 403 erfolgt eine Beurteilung, ob es sich bei dem resultierenden Signal um das Resultat eines ionisierenden Ereignisses handelt oder um Rauschen. In Schritt 404 werden dann die als gültige Messsignale identifizierten Signale zur Bestimmung des Füllstands oder der Dichte des Mediums verwendet.

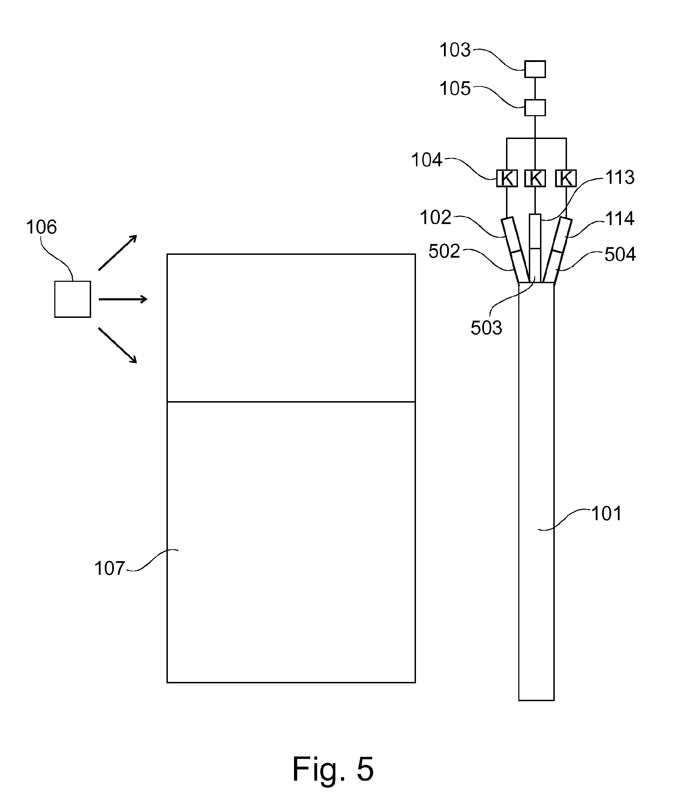

Fig. 5 zeigt ein Messsystem gemäß einem weiteren Ausführungsbeispiel der Erfindung, bei dem nicht ein gerichteter radioaktiver Strahler (wie in Fig. 1), sondern eine Strahlungsquelle 106 verwendet wird, die in mehrere Richtungen ausstrahlt und somit einen Großteil des Behälters 107 durchstrahlt. An dem Szintillator 101 sind an der Stirnseite (also an der Ober- und/oder der Unterseite) mehrere Photodioden 102,113,114 angekoppelt. Diese können mittels Lichtleitern 502, 503, 504 mit dem Szintillator verbunden sein. Die Lichtleiter teilen die entstehenden Lichtblitze auf, sodass jede Photodiode einen Teil·davon erhält und detektieren kann.

Es findet also keine vertikal auflösende Messung statt, sondern es wird die im Szintillator entstehende Lichtintensität gemessen. Aus der gemessenen Intensität, die mit der Anzahl an Ereignissen (Lichtblitzen) korrespondiert, kann auf die Füllhöhe oder die Dichte des Mediums im Behälter geschlossen werden.

Die Lichtleiter können aus Kunststoff, Glas oder aus Szintillatormaterial bestehen. Jedes andere Material, das die zweite elektromagnetische Strahlung, z.B. Licht, leiten kann ist hierfür geeignet. Auch eine direkte Kopplung der Photodiode an den Szintillator oder ein Luftspalt ist hierfür geeignet.

Ein oder mehrere Komparatoren 104 detektieren die Signale der Photodioden und erzeugen Spannungspulse. Vorzugsweise wird pro Photodiode mindestens ein Komparator verwendet. Eine Summationseinrichtung 105 kann die Spannungspulse der Komparatoren aufsummieren und die Information an die Auswerteeinheit 103 weitergeben, wenn eine Mindestanzahl an Komparatoren gleichzeitig ein Signal abgegeben haben und das Ereignis daher auf ein Messsignal und nicht auf ein Rauschsignal der Photodiode zurückzuführen ist.

Ergänzend ist darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Radiometrisches Füllstands- oder Dichtemesssystem zur Bestimmung eines Füllstands oder einer Dichte eines Mediums, das Messsystem (100) aufweisend:
einen Umwandler (101) zum zumindest teilweisen Umwandeln von ionisierender erster Strahlung, die das Medium durchstrahlt, in elektromagnetische zweite Strahlung;
mehrere Photodioden (102, 113, 114) zum zumindest teilweisen Umwandeln der zweiten Strahlung des Umwandlers (101) in Spannungspulse;
eine Auswerteeinheit (103) zum Bestimmung des Füllstands oder der Dichte des Mediums auf Basis einer Anzahl an erzeugten Spannungspulsen;
eine Summationseinrichtung (105) zum Aufsummieren von digitalen Signalen, die zur selben Zeit entstanden sind, oder von Spannungspulsen, die zur selben Zeit entstanden sind, und zur Ausgabe eines korrespondierenden Summensignals;
wobei die Auswerteeinheit (103) zum Zählen nur der Summensignale ausgeführt ist, welche eine vorbestimmte Mindestanzahl an digitalen Signalen oder eine vorbestimmte Mindestimpulsstärke aufweisen;
wobei die restlichen Summensignale verworfen werden.

2. Messsystem nach Anspruch 1,
wobei es sich bei der Photodiode um eine Lawinenphotodiode handelt.

3. Messsystem nach einem der vorhergehenden Ansprüche,
wobei das Messsystem eine Vielzahl an Photodioden aufweist, die als Array angeordnet sind.

4. Messsystem nach einem der vorhergehenden Ansprüche,
wobei der Umwandler (101) als Szintillator ausgeführt ist.

5. Messsystem nach einem der vorhergehenden Ansprüche, weiterhin aufweisend:
einen Komparator (104) zum Umwandeln der Spannungspulse in digitale Signale.

6. Messsystem nach einem der vorhergehenden Ansprüche,
wobei die Auswerteeinheit (103) zum Zählen der digitalen Signale aus dem Komparator oder der Spannungspulse ausgeführt ist.

7. Verfahren zur radiometrischen Bestimmung eines Füllstands oder einer Dichte eines Mediums, das Verfahren aufweisend die Schritte:
zumindest teilweises Umwandeln von ionisierender erster Strahlung, die das Medium durchstrahlt, in elektromagnetische zweite Strahlung durch einen Umwandler (101);
zumindest teilweises Umwandeln der zweiten Strahlung des Umwandlers (101) in Spannungspulse mit Hilfe mehrerer Photodioden (102, 113, 114);
Umwandeln der Spannungspulse in digitale Signale und Aufsummieren von digitalen Signalen, die zur selben Zeit entstanden sind, oder Aufsummieren von Spannungspulsen, die zur selben Zeit entstanden sind, und
Ausgabe eines korrespondierenden Summensignals;
wobei nur die Summensignale gezählt werden, welche eine vorbestimmte Mindestanzahl an digitalen Signalen oder eine vorbestimmte Mindestimpulsstärke aufweisen;
Verwerfen der restlichen Summensignale;
Bestimmen des Füllstands oder der Dichte des Mediums auf Basis der Summensignale, welche eine vorbestimmte Mindestanzahl an digitalen Signalen oder eine vorbestimmte Mindestimpulsstärke aufweisen.

8. Verfahren nach Anspruch 7, weiterhin aufweisend den Schritt:
Zählen der digitalen Signale oder der Spannungspulse.

## Claims

1. A radiometric level or density measurement system for determining a level or a density of a medium, wherein the measurement system (100) features:
a converter (101) for at least partially converting ionizing first radiation that penetrates the medium into electromagnetic second radiation;
multiple photodiodes (102, 113, 114) for at least partially converting the second radiation from the converter (101) into voltage pulses;
an evaluation unit (103) for determining the level or the density of the medium based on a number of generated voltage pulses;
a summation device (105) for summing up digital signals, that were created at the same time or voltage pulses that were created at the same time, and for outputting a corresponding sum signal;
wherein the evaluation unit (103) is designed for counting only the sum signals, with a predetermined minimum number of digital signals or with a predetermined minimum pulse intensity;
wherein the remaining sum signals are discarded.

2. The measurement system of claim 1,
wherein the photodiode is an avalanche photodiode.

3. The measurement system of one of the preceding claims,
wherein the measurement system features a plurality of photodiodes, that are arranged in the form of an array.

4. The measurement system of one of the preceding claims,
wherein the converter (101) is realized in the form of a scintillator.

5. The measurement system of one of the preceding claims, furthermore featuring:
a comparator (104) for converting the voltage pulses into digital signals.

6. The measurement system of one of the preceding claims,
wherein the evaluation unit (103) is designed for counting the digital signals originating from the comparator or the voltage pulses.

7. A method for radiometrically determining a level or a density of a medium, wherein said method features the following steps:
at least partially converting ionizing first radiation, that penetrates the medium into electromagnetic second radiation through a converter (101);
at least partially converting the second radiation from the converter (101) into voltage pulses with the aid of multiple photodiodes (102, 113,114);
converting of the voltage pulses into digital signals and summing up of digital signals that were created at the same time or summing up of voltage pulses that were created at the same time and outputting of a corresponding sum signal;
wherein only the sum signals with a predetermined minimum number of digital signals or with a predetermined minimum pulse intensity are counted;
discarding the remaining sum signals;
determining the level or the density of the medium based on the sum signals with a predetermined minimum number of digital signals or with a predetermined minimum pulse intensity are counted.

8. The method of claim 7, furthermore featuring the following step:
counting the digital signals or the voltage pulses.

## Revendications

1. Système de mesure radiométrique de niveau ou de densité destiné à déterminer un niveau ou une densité d'un milieu, le système de mesure (100) comportant :
un convertisseur (101) pour convertir au moins partiellement un premier rayonnement ionisant qui traverse le milieu, en un second rayonnement électromagnétique,
plusieurs photodiodes (102, 113, 114) pour convertir au moins partiellement le second rayonnement du convertisseur (101) en impulsions de tension,
une unité d'évaluation (103) pour déterminer le niveau ou la densité du milieu sur la base d'un ensemble d'impulsions de tension générées,
un dispositif de sommation (105) pour totaliser des signaux numériques qui sont générés en même temps, ou d'impulsions de tension qui sont générées en même temps, et pour délivrer en sortie un signal de sommation correspondant,
dans lequel l'unité d'évaluation (103) est mise en oeuvre de manière à compter uniquement les signaux de sommation qui contiennent un nombre minimal prédéterminé de signaux numériques ou une intensité d'impulsion minimale prédéterminée,
dans lequel les signaux de sommation restants sont rejetés.

2. Système de mesure selon la revendication 1,
dans lequel la photodiode est une photodiode à avalanche.

3. Système de mesure selon l'une des revendications précédentes,
dans lequel le système de mesure comporte une pluralité de photodiodes qui sont agencées sous forme de réseau.

4. Système de mesure selon l'une des revendications précédentes,
dans lequel le convertisseur (101) est mis en oeuvre sous la forme d'un scintillateur.

5. Système de mesure selon l'une des revendications précédentes, comportant en outre :
un comparateur (104) pour convertir les impulsions de tension en signaux numériques.

6. Système de mesure selon l'une des revendications précédentes,
dans lequel l'unité d'évaluation (103) est conçue pour compter les signaux numériques provenant du comparateur, ou les impulsions de tension.

7. Procédé pour déterminer un niveau ou une densité d'un milieu par radiométrie, le procédé comportant les étapes consistant à :
convertir au moins partiellement un premier rayonnement ionisant qui traverse le milieu, en un second rayonnement électromagnétique par l'intermédiaire d'un convertisseur (101),
convertir au moins partiellement le second rayonnement du convertisseur (101) en impulsions de tension à l'aide de plusieurs photodiodes (102, 113, 114),
convertir les impulsions de tension en signaux numériques et totaliser les signaux numériques qui sont générés en même temps, ou totaliser les impulsions de tension qui sont générées en même temps, et
délivrer en sortie un signal de sommation correspondant,
dans lequel seuls sont comptabilisés les signaux de sommation qui contiennent un nombre minimal prédéterminé de signaux numériques ou une intensité d'impulsion minimale prédéterminée,
rejeter le reste des signaux de sommation,
déterminer le niveau ou la densité du milieu sur la base des signaux de sommation qui contiennent un nombre minimal prédéterminé de signaux numériques ou une intensité d'impulsion minimale prédéfinie.

8. Procédé selon la revendication 7, comportant en outre l'étape consistant à :
compter les signaux numériques ou les impulsions de tension.
